# EUROPEAN PATENT APPLICATION

(11) **EP 4 480 306 A1**
(43) Date of publication of application: **25.12.2024**
(21) Application number: 23755950.5
(22) Date of filing: 13.02.2023
(51) Int. Cl.: A01K 31/16

(54) **METHOD AND SYSTEM FOR DETECTING IRREGULARITIES IN A POULTRY FARMING FACILITY**

(30) Priority: 17.02.2022 ES 202230130
(71) Applicant: Zucami Poultry Equipment, S.L.U., 31191 Beriain Navarra (ES)
(72) Inventor: CARRILLO OLLETA, Gibran, 31191 BERIAIN (NAVARRA) (ES); ABAURREA CARRILLO, Iván, 31191 BERIAIN (NAVARRA) (ES)
(74) Representative: Cabinet Beau de Loménie
(86) International application number: PCT/ES2023/070074
(87) International publication number: WO 2023/156693

(57) **Abstract**

The invention relates to a method for detecting irregularities in a poultry farming facility (1) for collecting eggs (5), which comprises: a conveyor belt (2) for collecting eggs (5); a detection sensor unit (3) for detecting eggs on the conveyor belt (2); and at least one control unit configured to count the eggs detected by the detection sensors (3), wherein the control unit is also configured to monitor by means of a clock the time since the conveyor belt (2) is activated and to detect an anomaly in the distribution of eggs (5) upon counting an average number of eggs (5) less than a preset threshold limit of eggs per second, thereby calculating the point on the conveyor belt (2) where the irregularity occurred.

## Description

### Technical field

The present invention relates to the industry dedicated to facilities for laying hens, and more specifically to facilities for counting and collecting eggs.

### State of the art

Facilities in buildings for laying hens are currently known, wherein said hens can be in cages distributed throughout the building or they are free-range hens and there are feeders and nests in which the hens choose to lay eggs in this case.

Both facilities have a conveyor belt, which transports the eggs to a storage point. Facilities of this type can have a counting system with egg detection sensors counting the collected eggs until the egg collection stops.

However, in facilities of this type that can be several metres long and even distributed in battery cages at different heights, the problem arises that when an obstacle appears on the conveyor belt, there may be an obstruction that makes it difficult or completely obstructs the transport of the eggs to their storage point. Given the size of facilities of this type, in addition to the fact that the collection conveyor belts are covered to prevent poultry from accessing the same, it is difficult to identify the point in the facility where the irregularity has occurred and this problem is normally detected late by farmers, resulting in the breakage and loss of numerous eggs. Moreover, when it comes to locating and repairing the irregularity, the machine must be stopped for a long time until it is detected.

This type of irregularity in which an object obstructs the conveyor belt occurs more obviously in free-range hen facilities. When hens are going to die, they tend to do so in the nest since that is where they are less vulnerable. The nest has a floor that pivots to close it at night in order to prevent the hens from sleeping therein, and if the hen is dead, the closing mechanism pushes the dead hen towards the egg collection area. The body of the dead hen cannot pass through whole, since the hole is designed precisely to allow the eggs to pass but to prevent a hen from fitting in it, so that said hen cannot access the collection area when it is alive. This dead hen partially obstructs the conveyor belt, causing the eggs to move to one side, generating accumulations of eggs that make it difficult to transport them. When the body of the dead hen begins to decompose, it fits through the hole, passing completely into the collection area, being transported by the conveyor belt and completely obstructing the conveyor belt at some point in the facility.

In this case, the collection area is arranged below the platform where the hens are distributed; therefore, the collection area is completely hidden and therefore the dead hen is not visible to the farmer, complicating its location for its removal.

In view of the described drawbacks or limitations presented by the currently existing solutions, a solution that allows detecting irregularities to determine their location and remove the obstructions or repair the points in the facility where the irregularities occur is necessary.

### Object of the invention

In order to achieve this objective and solve the technical problems discussed so far, in addition to providing additional advantages that can be derived later, the present invention provides a method for detecting irregularities in a poultry farming facility for collecting eggs, which comprises a conveyor belt for collecting eggs, at least one detection sensor unit for detecting eggs on the conveyor belt and a control unit configured to count the eggs detected by the detection sensors, wherein the control unit is also configured to monitor by means of a clock the time since the conveyor belt is activated and to detect an anomaly in the distribution of eggs upon counting an average number of eggs less than a preset threshold limit of eggs per second for a predetermined time, thereby calculating the point on the conveyor belt where the irregularity occurred.

The conveyor belt is activated once a day, so that thanks to this configuration, when any anomaly such as the absence of eggs on the conveyor belt (total obstruction) or a sudden change in their distribution (partial obstruction) is detected, knowing the transport speed monitored by the control unit and recording, with the clock, the time elapsed since the transport of eggs begins until the anomaly is detected, the control unit can identify the point in the facility where the irregularity occurred. Thus, the farmer can go directly to the point where the irregularity appears, such as a dead hen or a foreign object, and remove it, both in facilities for caged hens and for free-range hens.

In general, total obstruction of the conveyor belt caused by the body of a hen is preceded by a partial obstruction a few days before and it is manifested through a sudden change in the distribution of the eggs on the conveyor belt when the eggs pass in front of the obstruction. Anomalies of this type, despite not causing problems at the time, are a warning that total obstruction may occur. Being able to read and analyse the distribution of the eggs on the conveyor belt over time makes it possible to anticipate and detect obstructions before they cause total blockage of the passage of eggs, an event that creates serious problems.

Furthermore, by reading the flow of eggs that pass by the counter over time, an anomaly in the distribution of eggs on the conveyor belt can be identified. In other words, a number of eggs less than a preset threshold limit considered as a normal value for the number of eggs per area appears on certain areas of the conveyor belt. This aspect of the invention helps to identify hens that lay fewer eggs in cage facilities or, in the case of free-range hens, it helps to identify a smaller number of hens in one nest than in another. In this way, irregularities in the facility are identified, such as draughts or lack of light that affect the hens and cause the hens to not position themselves in that area, where the farmer can repair this defect by identifying the area or nest where it occurs.

The aforementioned detection of the absence of eggs can be performed with a detection sensor unit that only detects the absence of eggs or that, in addition to the absence of eggs, detects their position. An example of a sensor unit that detects the position of the eggs transverse to the collection conveyor belt can be a sensor unit with a plurality of sensors distributed linearly transverse to the collection conveyor belt, so that by knowing which sensor does not detect eggs, a partial obstruction can be detected.

In this way, the system is capable of reading the distribution of eggs in two directions, longitudinally (in the direction of travel of the collection conveyor belt) or transversely (perpendicular to the collection conveyor belt), which allows it to detect:
- Longitudinally: differences in the flow of eggs that are collected. This indicates areas of the building with abnormal poultry density.
- Transversely: Sudden changes in the distribution of eggs on the conveyor belt, indicating a possible obstruction.

Moreover, by coordinating this reading with the operating time and speed of the driving motors, it is possible to identify the position where these anomalies exist.

To facilitate repair work, it is envisaged that the control unit is configured to issue an alarm when an anomaly is detected in the distribution of eggs, and to provide information on the location of the irregularity in the facility.

Optionally, the control unit will be configured to stop the conveyor belt when any of the previously defined anomalies are detected, which can be of great help to avoid further damage to the machinery when detecting, for example, breakage on a conveyor belt.

The system for detecting irregularities and the facility comprising said system and carrying out a detection method according to the foregoing will also be an object of the invention.

### Description of the figures

Figure 1 shows a perspective view of the poultry farming facility in this case for free-range hens.
Figure 2 shows a top schematic view of the facility, specifically of the conveyor belt at the initial moment before beginning to extract eggs, and identifying an irregularity such as a dead hen arranged at one point on the conveyor belt.
Figure 3 shows a top schematic view of the facility like the one in figure 2, in this case for the moment when the anomaly is detected.
Figure 4 shows a top schematic view of the facility, specifically of the conveyor belt at the initial moment before beginning to extract eggs when there is a smaller distribution of eggs in an area of the conveyor belt.
Figure 5 shows a schematic side section view of the facility.

### Detailed description of the invention

In view of the aforementioned figures, and in accordance with the adopted numbering, a practical non-limiting exemplary embodiment of the invention is shown, which comprises the parts and elements indicated and described in detail below.

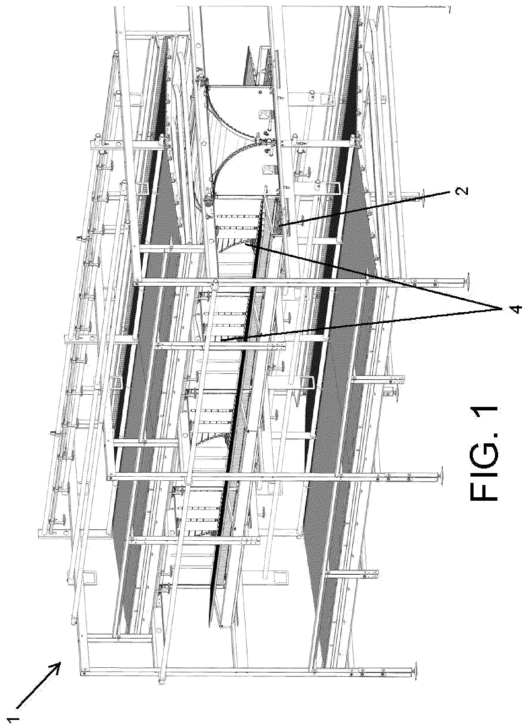

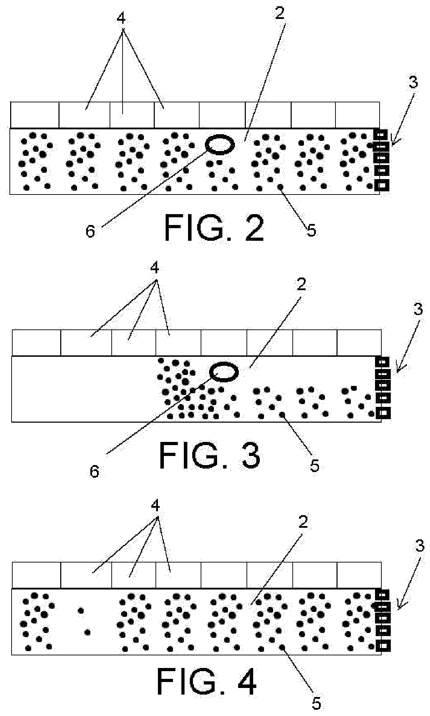

As shown in figure 1, in this case it is a poultry farming facility (1) for free-range hens, which is made up of several heights that the hens access, and having feeders and nests (4) that said hens enter in order to lay eggs (5). This facility comprises a conveyor belt (2) for eggs (5) that is located under a platform (8) on which the hens circulate. As shown in figure 1, this facility comprises a detection sensor unit (3), a conveyor belt (2) or collection conveyor belt, where the poultry farming facility (1) may comprise more than one conveyor belt. According to a practical example of the invention, in addition to detecting the presence of eggs, the sensor unit (3) detects the position of the same in the transverse direction of the collection conveyor belt (2). To detect the position along the width of the conveyor belt (2), the example of schematic figures 2 to 4 has a plurality of detection sensors arranged transversely aligned with the conveyor belt (2), covering its entire width and said sensor unit (3) being arranged at the end of the conveyor belt (2). This facility will have a control unit that, through a programmable logic controller (PLC), records the egg (5) count, the sensors being preferably of the LED type, and even more preferably of the TOF (Time of Flight) type, with greater precision to avoid counting problems that may occur in LED-type sensors in certain lighting conditions.

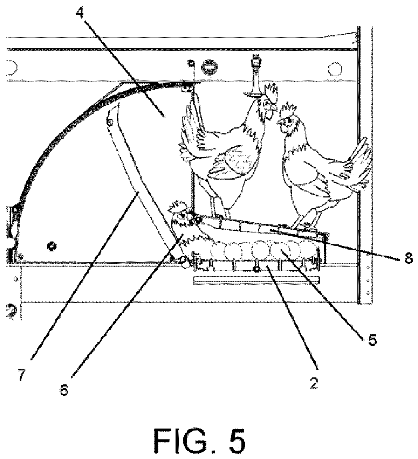

As shown in figure 5, the hens enter the nest (4) to lay eggs (5) on a floor (7) with an inclination that guides the eggs to a conveyor belt (2), there being a hole between the conveyor belt (2) and the platform (8) for the passage of the eggs (5) from the nest (4) to the conveyor belt (2). This floor (7) is pivoting and acts as a closing gate at night so that the hens do not sleep in the nests (4). Thus, as shown in figure 5, at the moment the gate (7) closes, if there is a dead hen (6) in the nest (4), said hen is dragged to the egg extraction area on the conveyor belt (2). This irregularity obstructs the transit of eggs from nests (4) upstream, causing the eggs (5) to move to one side of the conveyor belt (4).

This moment when there is an obstruction on the conveyor belt (4) is shown in figure 2, which shows a facility (1) in which a dead hen (6) has been trapped, blocking the passage, prior to activating the extraction of eggs (5). This irregularity means that, after some time, at the moment corresponding to figure 3, the eggs only reach the storage area at the end of the conveyor belt (2) on one side thereof.

This irregularity will be detected by the detection system of the invention so that from the initial moment shown in figure 2 to the moment when an anomaly is detected by the sensor unit (3), where in this case the anomaly is that after a minimum detection time the number of eggs (5) is zero, the control unit via a PLC measures, using a clock, timer or similar, the time elapsed since the motor is activated, and by knowing the speed of the motor with which the conveyor belt has moved (where the speed is monitored by the control unit of the facility), the PLC calculates the distance that has passed from the beginning and determines the point in the facility where the irregularity occurred.

Preferably, upon detecting the irregularity, the control unit of the detection system will issue an alarm and show on a display the estimated point where the dead hen (6) is located so that the farmer can remove it. Thus, the dead hen (6) is detected days before it starts to decompose and pass completely to the conveyor belt (4), with the complete obstruction that it could cause and the unsanitary consequences that this entails.

Likewise, when an absence of eggs (5) is detected across the entire width of the conveyor belt for a time greater than the predetermined time, considered as the maximum time of absence of eggs on the conveyor belt, it will be identified by the PLC of the control unit as a serious irregularity, such as breakage on the conveyor belt (2), and the control unit will stop the machine at that moment.

Another situation that usually occurs in poultry farming facilities (1) of this type is the one represented in figure 4, in which there is an irregularity in the distribution of eggs on the conveyor belt (2) before it is activated.

In this case, the control unit is also configured to detect said irregularity where the number of eggs (5) is less than a preset threshold limit of eggs per second, in other words, moments when there is a number of eggs less than the number considered as usual distribution. Like in the situation of absence of eggs, and taking into account the speed of the conveyor belt (2), the PLC of the control unit calculates the points at which a lower number of eggs is detected, so that it will be reported on the display of the nests (4) in which this situation occurs. This location will help farmers act to solve possible defects in lighting or draughts that could affect the hens so that there are fewer eggs in those nests (4).

Therefore, the system for detecting irregularities in the poultry farming facility (1) will detect and calculate irregularities of this type from the anomalies in the distribution of eggs on the conveyor belt (2).

## Claims

1. A method for detecting irregularities in a poultry farming facility (1) for collecting eggs (5), which comprises: a conveyor belt (2) for collecting eggs (5); at least one detection sensor unit (3) for detecting eggs on the conveyor belt (2); and a control unit configured to count the eggs detected by the detection sensors (3), **characterised in that** the control unit is also configured to monitor by means of a clock the time the conveyor belt (2) is activated and to detect an anomaly in the distribution of eggs (5) upon counting an average number of eggs (5) less than a preset threshold limit of eggs per second, thereby calculating the point on the conveyor belt (2) where the irregularity occurred.

2. The method for detecting irregularities in a poultry farming facility (1) according to the preceding claim, **characterised in that** the detection sensor unit (3) comprises a plurality of sensors distributed linearly transverse to the conveyor belt (2).

3. The method for detecting irregularities in the distribution of eggs according to any one of the preceding claims, **characterised in that** the control unit is configured to issue an alarm and information and/or stop the conveyor belt (2) upon detecting an anomaly in the distribution of eggs (5).

4. A system for detecting irregularities in a poultry farming facility (1) for collecting eggs (5), which carries out a detection method according to any one of the preceding claims, **characterised in that** it comprises a counter clock, a sensor detection unit (3) with at least one detection sensor and a control unit configured to detect the point on the conveyor belt (2) where the irregularity occurs.

5. The system for detecting irregularities in a poultry farming facility (1) according to the preceding claim, **characterised in that** the detection sensors (3) are of the LED type.

6. The system for detecting irregularities in a facility for collecting eggs according to claim 4, **characterised in that** the detection sensors (3) are of the TOF type.

7. The system for detecting irregularities in a facility for collecting eggs according to any one of claims 4 to 6, **characterised in that** it comprises an alarm and a display of information on the location of the irregularity.

8. A poultry farming facility (1) comprising a system for detecting irregularities according to any one of claims 4 to 7.
